# EUROPÄISCHE PATENTSCHRIFT

(11) **EP 3 322 922 B1**
(45) Veröffentlichungstag und Bekanntmachung des Hinweises auf die Patenterteilung: **15.01.2020**
(21) Anmeldenummer: 16727464.6
(22) Anmeldetag: 02.06.2016
(51) Int. Cl.: F16J 9/20

(54) **KOMPRESSIONSKOLBENRING MIT PROFILIERUNG**
COMPRESSION PISTON RING WITH PROFILED SECTION
SEGMENT DE PISTON DE COMPRESSION DOTÉ D'UN PROFILAGE

(30) Priorität: 13.07.2015 DE 102015111306
(43) Veröffentlichungstag der Anmeldung: 23.05.2018
(73) Patentinhaber: Federal-Mogul Burscheid GmbH, 51399 Burscheid (DE)
(72) Erfinder: MITTLER, Richard, 51399 Burscheid (DE); ESSER, Peter, 51515 Kürten (DE)
(74) Vertreter: Becker Kurig Straus
(86) Internationale Anmeldenummer: PCT/EP2016/062474
(87) Internationale Veröffentlichungsnummer: WO 2017/008948

(56) Entgegenhaltungen:
- DE-A1- 4 429 649
- JP-A- H 094 711
- US-A- 1 585 422
- US-A- 2 554 289

## Beschreibung

Die vorliegende Erfindung betrifft einen Kompressionskolbenring mit einem Laufflächenbereich, der eine Profilierung mit zwei Scheitelpunkten unterhalb einer Mitte einer Höhe des Kolbenrings aufweist.

Kolbenringe und insbesondere Kompressions-Kolbenringe werden üblicherweise sowohl in der ersten (obersten) als auch in der zweiten (mittleren) Kolbenringnut von Verbrennungsmotoren eingesetzt. Hierbei ist die Funktion des Kompressionsrings durch die folgenden Eigenschaften beschrieben:
1. Abdichten des Kurbelgehäuses gegen Verbrennungsgase.
2. Abstreifen von überschüssigem Schmieröl, so dass möglichst wenig davon an der Zylinderinnenwand verbleibt und verbrannt werden kann.

Eingesetzt werden hierzu Ringe mit einer balligen Ausführung der Lauffläche. Ein Großteil des Gases strömt bzw. fließt bei einem Kompressionsring nicht nur durch den Stoß, sondern je nach Wanddicke und Durchmesser über die untere Ringflanke in Richtung Kurbelgehäuse ab. Dieser Gasfuß ist heute hauptsächlich durch die Flankenrauigkeit und Welligkeit sowohl der Kolbenringflanke als auch der Kolbennutflanke an den Kontaktbereichen bedingt. Zusätzlich kann je nach Temperatureinfluss eine Verformung der Kolbennut auftreten, was sich ebenfalls negativ auf die Abdichtung auswirkt.

Bisher ist bekannt, Kompressionsringe symmetrisch oder ballig symmetrisch mit jeweils einem maximalen Kontaktpunkt an der Lauffläche auszuführen. Die Kolbenringnutflanken und die Kolbenringflanken werden dabei mit einer definierten Rauheit gefertigt, um den Kolbenringen eine definierte Beweglichkeit in Umfangsrichtung zu verleihen. Üblicherweise wird die Welligkeit der Kolbenringnut und des Kolbenrings selbst nicht betrachtet.

US 1585422 offenbart einen Kompressionskolbenring gemäß dem Oberbegriff des Anspruchs 1.

Die vorliegende Erfindung betrifft einen Kompressionskolbenring mit einem Laufflächenbereich, der eine Profilierung mit zwei Scheitelpunkten aufweist, die unterhalb einer Mitte einer Höhe des Kolbenrings liegen, mit den Merkmalen des Anspruchs 1. Bevorzugte Ausführungen sind in den abhängigen Ansprüchen beschrieben.

Der erfindungsgemäße Kompressionskolbenring weist einen Laufflächenbereich, eine obere Flanke, eine untere Flanke sowie eine innere Umfangsfläche auf. Der Laufflächenbereich ist mit einer Profilierung versehen, die über die axiale Höhe des Laufflächenbereichs gesehen jeweils einen oberen Scheitelpunkt und einen unteren Scheitelpunkt aufweist, die voneinander beabstandet und konvex ballig ausgebildet sind. Der obere Abschnitt weist den oberen Scheitelpunkt auf und der untere Abschnitt weist den unteren Scheitelpunkt auf. Zwischen den Scheitelpunkten ist eine Nut mit einer Nut-Tiefe angeordnet. Beide Scheitelpunkte sind in Axialrichtung unterhalb einer Mitte (gemäß einer Höhe) des Kolbenrings angeordnet.

Der Begriff "oben" wird hier im Sinne von "in Richtung des Brennraums" bzw. "in Richtung des Kolbenbodens" verwendet. Der Begriff "unten" wird hier im Sinne von "in Richtung des Kurbelgehäuses" bzw. "in Richtung des Kolbenhemds" verwendet.

Es handelt sich um einen Kompressionsring, der mehr als einen maximalen Kontaktpunkt bzw. mehr als eine Kontaktlinie an der Lauffläche aufweist. Diese sind zusätzlich alle unterhalb der Mitte der axialen Höhe angebracht. Hierbei wird die Ölabstreifwirkung beim Abwärtshub deutlich gesteigert, ohne die Überlauffähigkeit bzw. das Aufschwimmen auf dem Ölfilm im Aufwärtshub zu verändern. Beide sogenannten Pivot-Punkte bzw. Scheitelpunkte liegen auf einer einhüllenden Kurve und werden dadurch beschrieben, dass im Fall von zwei Pivot-Punkten beide Punkte Elemente der gesamten Laufflächenlinie sind und exakt den höchsten Punkt der Linie beschreiben. Hierdurch werden im Abwärtshub die Hydrodynamik und damit das Aufschwimmen des Kolbenrings verringert, was unweigerlich zu einer erhöhten Abstreifwirkung im Abwärtshub führt. Durch die Balligkeitslinie oberhalb des oberen Scheitelpunkts kann im Aufwärtshub eine zu einem herkömmlichen Kompressionsring identische Hydrodynamik erreicht werden.

Die balligen Abschnitte sind, bezogen auf die axiale Höhe des Laufflächenbereichs, asymmetrisch zueinander angeordnet. Dadurch kann, wie bei herkömmlichen asymmetrisch geformten balligen Kompressionsringen, die Abstreifwirkung des Kolbenrings verbessert werden.

Bei einer beispielhaften Ausführungsform des Kolbenrings ist der obere Scheitelpunkt in einem Bereich von 22% bis 45%, bevorzugt 25% bis 40% und weiter bevorzugt 30% bis 35% der Gesamthöhe des Kolbenring angeordnet. Weiterhin kann der untere Scheitelpunkt in einem Bereich von 0% bis 20%, bevorzugt 5% bis 18% und weiter bevorzugt 10% bis 15% der Gesamthöhe des Kolbenring angeordnet sein.

In einer zusätzlichen beispielhaften Ausführungsform des Kolbenrings weist eine obere Außenkante des Kolbenrings eine größere obere Tiefe gegenüber dem oberen Scheitelpunkt auf, als die eine untere Tiefe der unteren Außenkante gegenüber dem unteren Scheitelpunkt. Dies entspricht einem längeren flacheren Anstieg an dem Teil der Lauffläche, der sich von dem oberen Scheitelpunkt bis zum oberen Rand des Kolbenrings erstreckt, als in dem Bereich, der sich von dem unteren Scheitelpunkt bis zum unteren Rand erstreckt.

In einer weiteren Ausführungsform umfasst der Kolbenring einen dritten, mittleren konvex-balligen Abschnitt mit einem Scheitelpunkt, der zwischen dem oberen Scheitelpunkt und dem unteren Scheitelpunkt angeordnet ist. Der mittlere Scheitelpunkt weist eine größere radiale Erstreckung auf als der obere Scheitelpunkt und/oder der untere Scheitelpunkt.

Bei einer zusätzlichen Ausführung des Kolbenrings ist ein Winkel zwischen einer Axialrichtung des Kolbenrings und einer Linie zwischen dem oberen Scheitelpunkt und dem mittleren Scheitelpunkt gleich einem Winkel zwischen der Axialrichtung des Kolbenrings und einer Linie zwischen dem mittleren Scheitelpunkt und dem unteren Scheitelpunkt. Im Wesentlichen spannen die Kontaktlinien gleiche kegelförmige und spiegelsymmetrische Flächen auf. Wenn der Kolbenring in der Kolbenringnut verkippt, stehen immer noch jeweils zwei Kontaktlinien zum Abstreifen von Öl zur Verfügung. In dieser Ausführung wird angenommen, dass der Ring jeweils sowohl bei der Aufwärtsbewegung als auch bei der Abwärtsbewegung in gleichem Maße verkippt.

Wenn nun der Kolbenring in der Kolbenringnut verkippt, stehen immer noch jeweils zwei Kontaktlinien zum Abstreifen von Öl zur Verfügung. In dieser Ausführung wird angenommen, dass der Ring jeweils sowohl bei der Aufwärtsbewegung als auch bei der Abwärtsbewegung in gleichem Maße verkippt.

Bei einer zusätzlichen Ausführung des Kolbenrings ist eine Axialrichtung des Kolbenrings parallel zu einer Linie zwischen dem oberen Scheitelpunkt und dem mittleren Scheitelpunkt gegeben und zusätzlich liegt ein Winkel zwischen der Axialrichtung des Kolbenrings und einer Linie zwischen dem mittleren Scheitelpunkt und dem unteren Scheitelpunkt vor. Im Wesentlichen spannen die oberen beiden Kontaktlinien eine Zylinderfläche auf. Die unteren beiden Kontaktlinien spannen eine Kegelfläche auf. Wenn sich der Kolben in einem Arbeitstakt nach unten bewegt, drücken die Verbrennungsgase den Kolbenring gegen die untere Kolbenringnut, so dass der Kolbenring flach auf der unteren Kolbenringnut aufliegt und so der mittlere und der oberer Scheitelpunkt (bzw. die Kontaktlinie) mit der Zylinderinnenfläche in Kontakt stehen. Wenn sich der Kolben jedoch beim Ansaugtakt nach unten bewegt, wird neue Luft in den Zylinder gesaugt und der Kolbenring liegt an der oberen Flanke der Kolbenringnut an und verkippt bzw. twistet positiv, so dass er leicht schräg an der unteren Kolbenringnut anliegt. In dieser Position können nun der mittlere und der untere Scheitelpunkt (bzw. die jeweilige Kontaktlinie) mit der Zylinderinnenfläche in Kontakt stehen.

Wenn der Kolbenring in der Kolbenringnut verkippt, stehen immer noch jeweils zwei Kontaktlinien zum Abstreifen von Öl zur Verfügung. In dieser Ausführung wird angenommen, dass der Ring jeweils bei der Abwärtsbewegung des Arbeitstakts anders verkippt bzw. twistet als beim Ansaugtakt.

In einer weiteren Ausführungsform des Kolbenrings ist die Kontur der Abschnitte jeweils zwischen dem oberen Scheitelpunkt und dem mittleren Scheitelpunkt gleich der Kontur zwischen dem mittleren Scheitelpunkt und dem unteren Scheitelpunkt. Die jeweilige Kontur kann dabei zueinander verkippt sein, da die drei Scheitelpunkte So, Sm und Su nicht unbedingt auf einer Linie liegen. Durch diese Ausführung können zwischen den Scheitelpunkten So und Sm einerseits und Sm und Su andererseits die gleichen hydrodynamischen Effekte in der jeweiligen Nut zwischen den Scheitelpunkten genutzt werden. Zwischen den Scheitelpunkten So und Sm befindet sich eine erste obere Nut No und zwischen den Scheitelpunkten und Sm und Su befindet sich eine zweite untere Nut Nu.

In einer anderen Ausführungsform des Kolbenrings ist der Laufflächenbereich mindestens im Bereich der Scheitelpunkte mit einer Verschleißschutzschicht wie Diamond like Carbon (DLC) versehen. Die Scheitelpunkte bzw. Kontaktlinien bilden nur einen kleinen Teil der Höhenausdehnung des Kolbenrings, folglich sind hier hohe Flächenpressungen und ein erhöhter Verschleiß zu erwarten. Die feinen Strukturen der Scheitelpunkte würden ohne eine geeignete Verschleißschutzschicht schnell abgetragen sein und der Kolbenring würde sich in einen herkömmlichen balligen Kompressionsring verwandeln.

Bei einer anderen Ausführung des Kolbenrings beträgt die obere Tiefe (To) zwischen 20 und 40 µm, die Tiefe der Nut (Tn) zwischen 1 und 5 µm und die untere Tiefe (Tu) zwischen 5 und 20 µm. In der Version mit drei Scheitelpunkten So, Sm und Su weisen die Nuten zwischen den Scheitelpunkten bzw. -linien So und Sm einerseits und Sm und Su andererseits jeweils die gleichen Abmessungen auf.

In einer weiteren beispielhaften Ausführung des Kolbenrings liegen der obere und der untere Scheitelpunkt (So, Su) bei einem eingebauten Ring ohne weitere Belastung jeweils in der gleichen radialen Ebene bzw. auf der gleichen Zylinderfläche. In einer anderen beispielhaften Ausführung des Kolbenrings liegen der obere und der mittlere Scheitelpunkt (So, Su) bei einem eingebauten Ring ohne weitere Belastung jeweils in der gleichen radialen Ebene bzw. auf der gleichen Zylinderfläche.

Im Folgenden wird die vorliegende Erfindung anhand von schematischen Figuren von einzelnen beispielhaften Ausführungsformen näher erläutert.
Fig. 1 stellt eine radiale Schnittansicht eines herkömmlichen Kompressions-Kolbenrings dar.
Fig. 2 stellt eine Schnittansicht einer ersten Ausführung eines erfindungsgemäßen Kolbenrings dar.
Fig. 3A zeigt eine Schnittansicht einer weiteren Ausführung eines erfindungsgemäßen Kolbenrings.
Fig. 3B zeigt eine Schnittansicht des Kolbenrings von Figur 3A unter Belastung.
Fig. 4A zeigt eine Schnittansicht einer zusätzlichen Ausführung eines erfindungsgemäßen Kolbenrings.
Fig. 4B zeigt eine Schnittansicht des Kolbenrings von Figur 4A unter Belastung.

Im Folgenden werden sowohl in der Beschreibung als auch in der Zeichnung gleiche Bezugszeichen verwendet, um auf gleiche oder ähnliche Elemente und Komponenten Bezug zu nehmen.

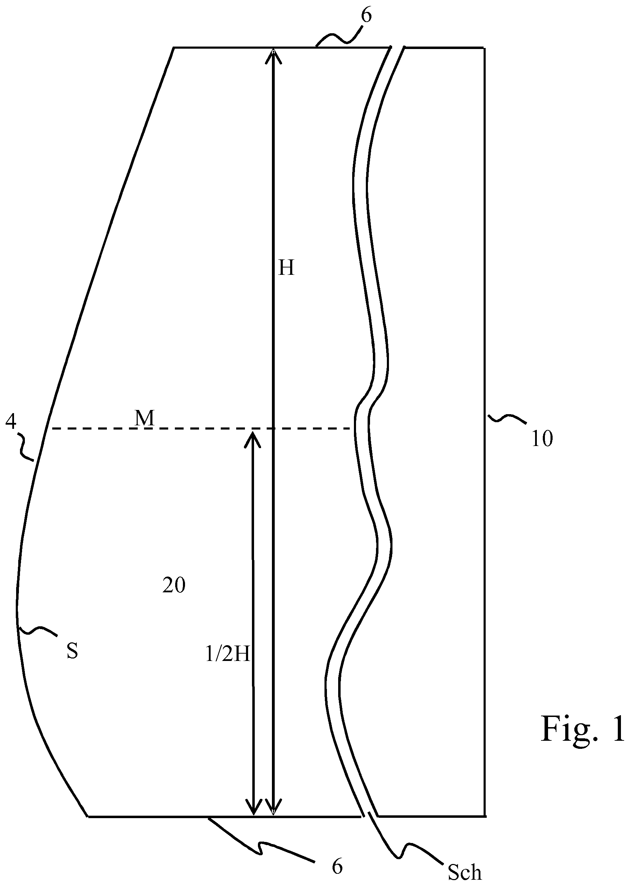

Fig. 1 stellt eine radiale Schnittansicht eines herkömmlichen Kompressions-Kolbenrings 20 dar. Der herkömmlichen Kompressions-Kolbenring 20 weist einen Laufflächenbereich 4, eine obere Flanke 6, eine untere Flanke 8 und eine innere Umfangsfläche 10 auf. Der herkömmliche Kompressions-Kolbenring 20 weist einen ballig geformten Laufflächenbereich 4 auf, der einen Scheitelpunkt S umfasst, wobei der Laufflächenbereich 4 in Bezug auf eine Mitte M auf der halben Höhe (1/2H) der Höhe H des herkömmlichen Kompressions-Kolbenrings 20 angeordnet ist. Die Lauffläche des herkömmlichen Kompressions-Kolbenrings 20 ist asymmetrisch ausgeführt, wobei der Kolbenring bei einer Aufwärtsbewegung auf einem vorhandenen Ölfilm aufschwimmen kann, bei einer Abwärtsbewegung jedoch Öl von einer Zylinderinnenwand (nicht dargestellt) abstreifen kann. Die Schnittansicht ist in Radialrichtung aufgeschnitten, um das Profil der Lauffläche so deutlich wie möglich darstellen zu können, ohne durch die in Radialrichtung größere Abmessung des herkömmlichen Kompressions-Kolbenrings 20 eingeschränkt zu sein.

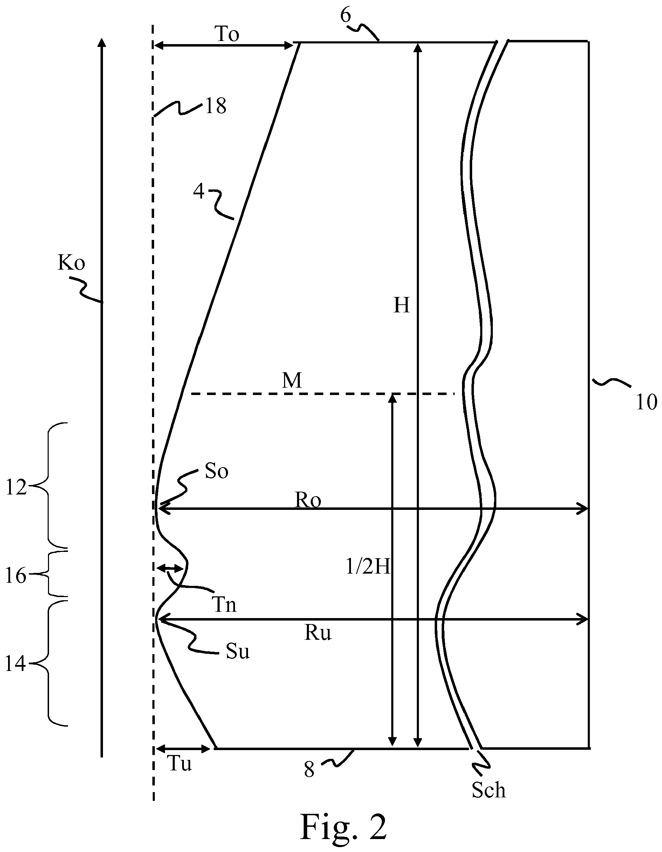

Fig. 2 stellt eine Schnittansicht einer ersten Ausführung eines erfindungsgemäßen Kolbenrings 2 dar. Der erfindungsgemäße Kolbenring 2 weist ebenfalls einen Laufflächenbereich 4, eine obere Flanke 6, eine untere Flanke 8 und eine innere Umfangsfläche 10 auf. Der erfindungsgemäße Kompressions-Kolbenring 2 weist einen ballig geformten Laufflächenbereich 4 auf, auf dem ein oberer Scheitelpunkt So und ein unterer Scheitelpunkt Su angeordnet sind, die durch eine Einbuchtung, die eine Nut 16 bildet, voneinander getrennt sind. Der obere Scheitelpunkt So ist in einem oberen Laufflächenabschnitt 12 angeordnet und der untere Scheitelpunkt Su ist in einem unteren Laufflächenabschnitt 14 angeordnet. Beide Scheitelpunkte So und Su sind unterhalb einer Mitte M auf der halben Höhe 1/2H der Gesamthöhe H des Kompressions-Kolbenrings 2 angeordnet. Anstelle nur eines Scheitelpunkts S sind ein oberer Scheitelpunkt So und ein unterer Scheitelpunkt Su vorgesehen, die durch die Nut 16 voneinander getrennt sind. Die Nut 16 bildet ein Ölrückhaltereservoir, das die Schmierung und die Abstreifwirkung des Kolbenrings 2 verbessert. Wie bei dem herkömmlichen Kompressions-Kolbenring 20 von Figur 1 weist der Laufflächenbereich 4 eine asymmetrische Form auf.

Die zwei Scheitelpunkte So und Su liegen bei einem eingebauten und ansonsten unbelasteten Kolbenring auf einer Zylinderfläche bzw. auf der Zylinderinnenfläche.

Der obere Rand weist eine Tiefe To gegenüber dem jeweils höchsten Scheitelpunkt So bzw. Su auf, die größer ist als die Tiefe Tu des unteren Rands jeweils des Laufflächenbereichs. Durch diese asymmetrische Form kann der Kolbenring wie im Fall des herkömmlichen Kolbenrings 20 von Fig. 1 bei einer Aufwärtsbewegung auf einem vorhandenen Ölfilm aufschwimmen und bei einer Abwärtsbewegung Öl von einer Zylinderinnenwand 18 abstreifen. Die Tiefe Tn der Nut 16 zwischen den Scheitelpunkten So und Su ist geringer als To und Tu. Die beiden Scheitelpunkte So und Su weisen im eingebauten Zustand des Kolbenrings 2 die gleiche Radialabmessung auf, so dass sie jeweils Kontaktlinien auf der Innenseite der Zylinderinnenfläche 18 bilden. Auch in Figur 2 ist die Schnittansicht in Radialrichtung entlang der Schnittlinie aufgeschnitten und verkürzt dargestellt, um das Profil der Lauffläche so deutlicher darstellen zu können. In Figur 2 wird angenommen, dass der Kolbenring 2 mit den Kolbenringflanken 6, 8 entweder an der oberen oder an der unteren Kolbenringnutflanke flach aufliegt und nicht in Kolbenringnut verkippt.

Der Kompressionsring weist mehr als einen maximalen Kontaktpunkt bzw. mehr als eine Kontaktlinie an der Lauffläche auf. Diese sind zusätzlich alle unterhalb der Mitte M der axialen Höhe angeordnet. Beide sogenannten Pivot-Punkte bzw. Scheitelpunkte So und Su liegen auf einer einhüllenden Kurve und werden dadurch beschrieben, dass im Fall von zwei Pivot-Punkten beide Punkte Elemente der gesamten Laufflächenlinie sind und exakt den höchsten Punkt der Linie beschreiben, beide liegen daher auf einer Zylinderfläche. Hierdurch werden im Abwärtshub die Hydrodynamik und damit das Aufschwimmen des Kolbenrings verringert, was unweigerlich zu einer erhöhten Abstreifwirkung im Abwärtshub bzw. beim Aufwärtshub bzw. Kompressionshub in Richtung Ko führt. Durch die Balligkeitslinie oberhalb des oberen Scheitelpunkts kann im Aufwärtshub eine zu einem herkömmlichen Kompressionsring identische Hydrodynamik erreicht werden.

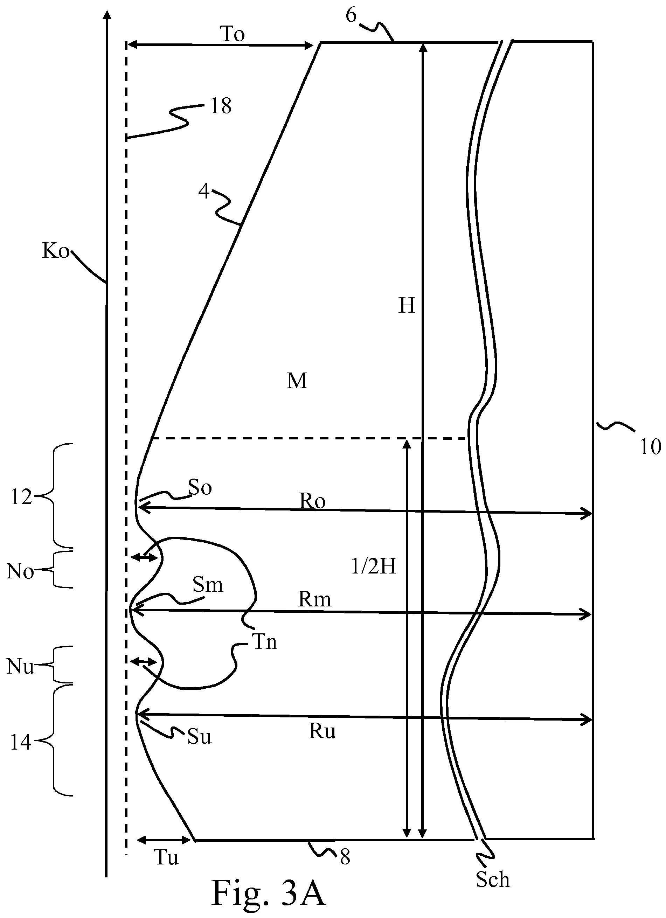

Fig. 3A stellt eine Schnittansicht einer zweiten Ausführung eines erfindungsgemäßen Kolbenrings 2 dar. Der grundsätzliche Aufbau entspricht der Ausführung von Figur 2 und wird hier nicht in allen Details wiederholt. In der Nut 16 von Figur 2 ist ein weiterer mittlerer Scheitelpunkt Sm angeordnet. Die Nut 16 ist in eine obere Nut No und eine untere Nut Nu geteilt. Der mittlere Scheitelpunkt weist eine größere radiale Abmessung Rm auf als jeweils die gleichen radialen Abmessungen Ro und Ru des oberen und des unteren Scheitelpunkts So und Su. In Figur 3A gilt Rm > Ro, Rm > Ru und Ro = Ru, wobei die Zeichen > und = im Bereich der Herstellungs- und Messgenauigkeit gelten sollen. Diese Ausführung geht davon aus, dass der Kolbenring sowohl bei einer Aufwärtsbewegung Ko als auch bei einer Abwärtsbewegung innerhalb der Kolbenringnut eines Kolbens leicht und gleichmäßig verkippt.

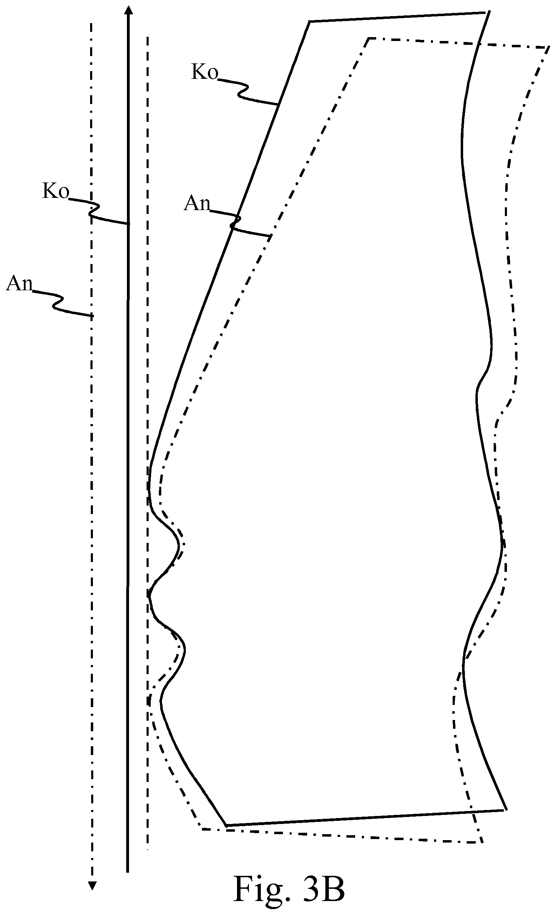

Die Wirkung des Aufbaus des Kolbenrings 2 von Figur 3A wird durch die Fig. 3B verdeutlicht. Der Kolbenring verkippt sowohl bei einer Aufwärtsbewegung Ko als auch bei einer Abwärts- bzw. Ansaugbewegung leicht in der Kolbenringnut. Bei der Aufwärtsbewegung Ko liegt der Kolbenring 2 negativ vertwistet mit dem oberen Scheitelpunkt So und dem mittleren Scheitelpunkt Sm des Profils an der Zylinderinnenwand an, wie es durch die durchgezogene Linie dargestellt ist. Die Strich-Doppelpunkt-Linie An zeigt hingegen den Kompressionsring in einer leicht positiv vertwisteten Stellung, die während eines Ansaugtakts bzw. einer Abwärtsbewegung des Kolbens erwartet wird. In dieser Form stehen sowohl bei einer Aufwärtsbewegung als auch bei einer Abwärtsbewegung immer zwei Kontaktlinien mit der Zylinderwand zur Abdichtung der Gase aus dem Brennraum zur Verfügung.

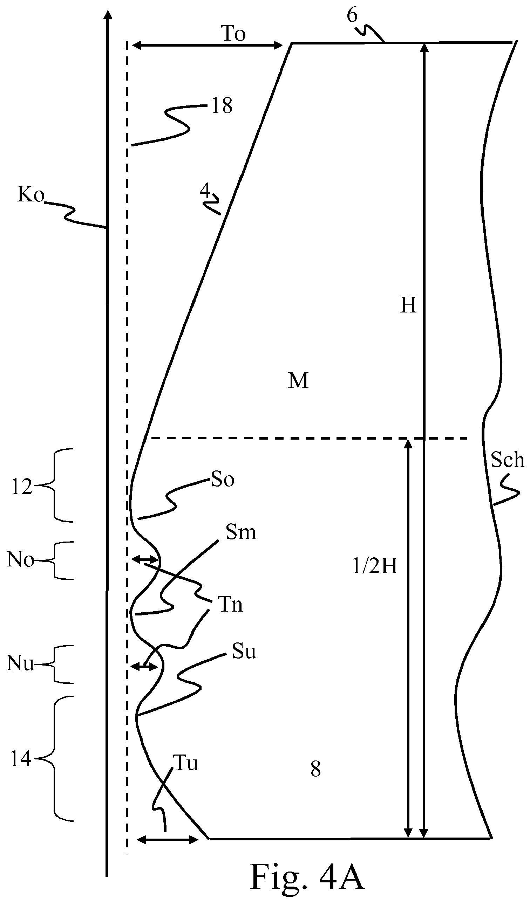

Fig. 4A stellt eine Schnittansicht einer zweiten Ausführung eines erfindungsgemäßen Kolbenrings 2 dar. Der grundsätzliche Aufbau entspricht der Ausführung von Figur 3A. Lediglich die radialen Abmessungen Ro, Rm und Ru sind anders verteilt. Der mittlere Scheitelpunkt Sm und der obere Scheitelpunkt Su weisen jeweils die radialen Abmessungen Ro und Rm auf, die gleich sind. Der untere Scheitelpunkt Su weist eine radiale Abmessung Ru auf, die kleiner ist als die radialen Abmessungen Ro und Rm des oberen und des mittleren Scheitelpunkts So und Sm. In Figur 4A gilt Ro > Ru, Rm > Ru und Ro = Rm, wobei die Zeichen > und = im Bereich der Herstellungs- und Messgenauigkeit gelten sollen.

Diese Ausführung ist dazu ausgelegt, jeweils bei einer Abwärtsbewegung des Kolbens eine maximale Abstreifwirkung zu erzielen. Der Kolbenring streift sowohl bei einer Abwärtsbewegung bei einem Ansaugtakt (An) als auch bei einer Abwärtsbewegung bei einem Arbeitstakt (Ar) Öl von der Zylinderinnenwand 18 ab. Dabei wird davon ausgegangen, dass der Kolbenring 2 innerhalb der Kolbenringnut beim Arbeitstakt Ar mit der unteren Kolbenringflanke 8 flach auf der unteren Kolbenringnutflanke aufliegt, und bei einem Ansaugtakt des Kolbens leicht und gleichmäßig verkippt.

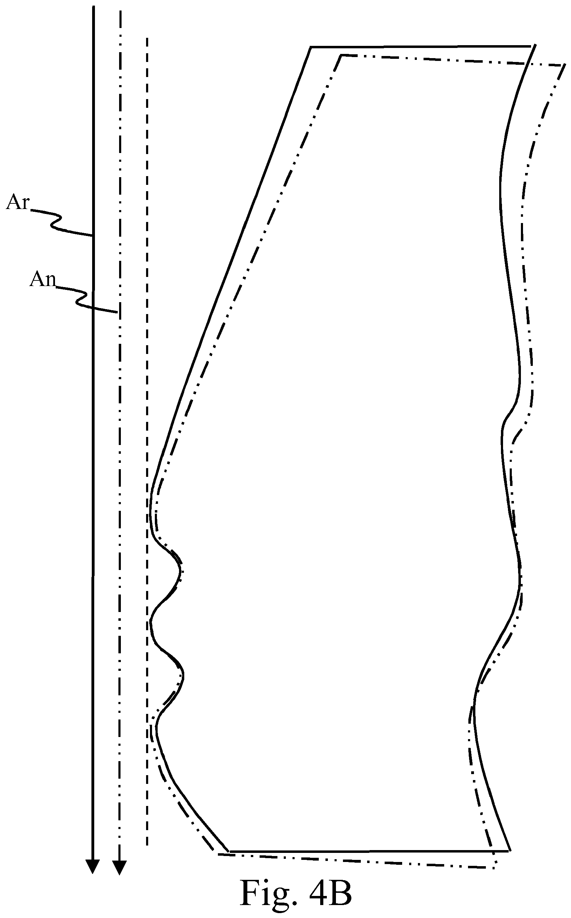

Die Wirkung des Aufbaus des Kolbenrings 2 von Figur 4A wird durch die Fig. 4B verdeutlicht. Der Kolbenring verkippt aufgrund der unterschiedlichen Druckverhältnisse nur bei einer Abwärtsbewegung des Ansaugtakts An leicht positiv vertwistet in der Kolbenringnut. Bei der Abwärtsbewegung des Kolbens beim Arbeitstakt Ar hingegen drückt der Überdruck der Verbrennungsgase den Kolbenring mit der unteren Kolbenringflanke flach gegen die untere Kolbenringnutflanke.

Bei der Abwärtsbewegung An des Ansaugtaktes liegt der Kolbenring 2 leicht positiv vertwistet mit dem mittleren Scheitelpunkt Sm und dem unteren Scheitelpunkt Su des Profils an der Zylinderinnenwand an, wie es durch die Strich-Doppelpunkt-Linien dargestellt ist. Die durchgezogene Linie Ar zeigt hingegen den Kompressionsring flach und unvertwistet, während einer Abwärtsbewegung des Kolbens während des Arbeitstakts. Mit dieser Form des Profils des Kolbenrings stehen sowohl bei einer Abwärtsbewegung des Ansaugtakts An als auch bei einer Abwärtsbewegung des Arbeitstakts immer zwei Kontaktlinien mit der Zylinderwand zur Abdichtung der Gase aus dem Brennraum und zum Abstreifen von Öl von der Zylinderinnenwand (hier gestrichelt dargestellt) zur Verfügung.

Der Kompressionsring weist immer mehr als einen maximalen Kontaktpunkt bzw. mehr als eine Kontaktlinie an der Lauffläche auf, auch wenn der Ring vertwistet. Diese Kontaktlinien sind alle unterhalb der Mitte M der axialen Höhe des Kolbenrings angeordnet. Der Kolbenring ist im Bereich der Scheitelpunkte So, Sm und Su jeweils ballig geformt und zwischen den Scheitelpunkte So, Sm und Su sind jeweils eine obere Nut Nu und eine untere Nut Nu gebildet. Die Nuten No und Nu sind bevorzugt mit einer identischen Form bzw. Profilierung versehen. Weiter bevorzugt weisen die Nuten No und Nu eine asymmetrische Form bzw. Profilierung auf, die den Effekt des asymmetrischen Kompressionsrings bezüglicher der Abstreifwirkung weiter verstärkt. Insbesondere ist vorgesehen, die obere Flanke der Nut steiler und die untere Flanke der Nut flacher auszugestalten. Hierdurch werden im Abwärtshub die Hydrodynamik und damit das Aufschwimmen des Kolbenrings verringert, was unweigerlich zu einer erhöhteren Abstreifwirkung im Abwärtshub als beim Aufwärtshub führt.

Um die Beschreibung nicht zu überlasten, wurde darauf verzichtet, alle Kombinationen von Kolbenringen einzeln aufzuführen, die von den Ansprüchen abgedeckt werden. Diese Kombinationen, die sich aus den Kombinationen der Merkmale der Ausführungsformen ergeben, sollen ebenfalls als offenbart betrachtet werden.

### Bezugszeichenliste

- 2: Kompressionskolbenring
- 4: Laufflächenbereich
- 6.: obere Flanke
- 8: untere Flanke
- 10: innere Umfangsfläche
- 12: oberer Abschnitt
- 14: unterer Abschnitt
- 18: Zylinderinnenfläche
- 20: Kompressionskolbenring
- Ko: Kompressionstakt
- An: Ansaugtakt
- Ar: Arbeitstakt
- H: Höhe
- L: Laufrichtung Aufwärtshub
- M: Mitte
- N: Nut
- No: obere Nut
- Nu: untere Nut
- P: Profilierung
- Rm: Radius mittlerer Scheitelpunkt
- Ro: Radius oberer Scheitelpunkt
- Ru: Radius unterer Scheitelpunkt
- S: Scheitelpunkt
- Sch: Schnittlinie
- Sm: mittlerer Scheitelpunkt
- So: oberer Scheitelpunkt
- Su: unterer Scheitelpunkt
- Tn: Tiefe der Nut
- To: Tiefe der oberen Kante unter dem höchsten Scheitelpunkt
- Tu: Tiefe der unteren Kante unter dem höchsten Scheitelpunkt

## Patentansprüche

1. Kompressionskolbenring (2) mit einem Laufflächenbereich (4), einer oberen Flanke (6), einer unteren Flanke (8) sowie einer inneren Umfangsfläche (10), wobei der Laufflächenbereich (4) mit einer Profilierung versehen ist, die über die axiale Höhe des Laufflächenbereichs (4) gesehen, voneinander beabstandete, konvex ballig ausgebildete, einen oberen und unteren Scheitelpunkt (So;Su) aufweisende Abschnitte (12,14) umfasst, wobei zwischen den Scheitelpunkten (So, Su) eine Nut (16) mit einer Tiefe (Tn) angeordnet ist, wobei die balligen Abschnitte (12;14), bezogen auf die axiale Höhe (H) des Laufflächenbereichs, asymmetrisch zueinander angeordnet sind, **dadurch gekennzeichnet, dass** beide Scheitelpunkte (So, Su) in Axialrichtung unterhalb einer Mitte (M) des Kolbenrings (2) angeordnet sind.

2. Kolbenring nach Anspruch 1, **dadurch gekennzeichnet, dass** der obere Scheitelpunkt (So) in einem Bereich von 22% bis 45%, bevorzugt 25% bis 40% und weiter bevorzugt 30% bis 35% der Gesamthöhe (H) des Kolbenring (2) angeordnet ist, und der untere Scheitelpunkt (Su) in einem Bereich von 0% bis 20%, bevorzugt 5% bis 18% und weiter bevorzugt 10% bis 15% der Gesamthöhe (H) des Kolbenring (2) angeordnet ist.

3. Kolbenring (2) nach Anspruch 1 oder 2, **dadurch gekennzeichnet, dass** eine obere Außenkante (18) des Kolbenrings (2) eine größere obere Tiefe (To) gegenüber dem oberen Scheitelpunkt (So) aufweist als eine untere Tiefe (Tu) der unteren Außenkante (20) gegenüber dem unteren Scheitelpunkt (Su).

4. Kolbenring (2) nach Anspruch 1, 2 oder 3, weiter aufweisend einen dritten, mittleren konvex-balligen Abschnitt mit einem Scheitelpunkt (Sm), der zwischen dem oberen Scheitelpunkt (So) und dem unteren Scheitelpunkt (Su) angeordnet ist, wobei der mittlere Scheitelpunkt (Sm) eine größere radiale Erstreckung aufweist als der obere Scheitelpunkt (So) und/oder der untere Scheitelpunkt (Su).

5. Kolbenring (2) nach Anspruch 4, **dadurch gekennzeichnet, dass** ein Winkel einer Axialrichtung des Kolbenrings (2) und einer Linie zwischen dem oberen Scheitelpunkt (So) und dem mittleren Scheitelpunkt (Sm) gleich einem Winkel zwischen einer Axialrichtung des Kolbenrings (2) und einer Linie zwischen dem mittleren Scheitelpunkt (Sm) und dem unteren Scheitelpunkt (Su) ist.

6. Kolbenring (2) nach Anspruch 4, **dadurch gekennzeichnet, dass** eine Linie zwischen dem oberen Scheitelpunkt (So) und dem mittleren Scheitelpunkt (Sm) parallel zu einer Axialrichtung des Kolbenrings (2) ist und der Winkel zwischen einer Axialrichtung des Kolbenrings (2) und einer Linie zwischen dem mittleren Scheitelpunkt (Sm) und dem unteren Scheitelpunkt (Su) zwischen 1 und 6, bevorzugt zwischen 2 und 5 und weiter bevorzugt zwischen 3 und 4 Winkelminuten beträgt.

7. Kolbenring (2) nach Anspruch 4, 5 oder 6, **dadurch gekennzeichnet, dass** die Kontur der Abschnitte jeweils zwischen dem oberen Scheitelpunkt (So) und dem mittleren Scheitelpunkt (Sm) gleich der Kontur zwischen dem mittleren Scheitelpunkt (Sm) und dem unteren Scheitelpunkt (Su) ist.

8. Kolbenring (2) nach einem der vorstehenden Ansprüche, **dadurch gekennzeichnet, dass** der Laufflächenbereich (8) mindestens im Bereich der Scheitelpunkte (So, Sm, Su) mit einer Verschleißschutzschicht, z.B. Diamond like Carbon (DLC), versehen ist.

9. Kolbenring nach einem der vorstehenden Ansprüche, **dadurch gekennzeichnet, dass** die Tiefe (To) der oberen Außenkante des Kolbenrings (2) gegenüber dem oberen Scheitelpunkt (So) zwischen 20 und 40 µm, die Tiefe der Nut (Tn) zwischen 1 und 5 µm und die Tiefe (Tu) der unteren Außenkante des Kolbenrings (2) gegenüber dem unteren Scheitelpunkt (Su) zwischen 5 und 20 µm liegt.

10. Kolbenring nach einem der Ansprüche 4-7, **dadurch gekennzeichnet, dass** der untere und der obere Scheitelpunkt (So, Su) jeweils in der gleichen Radialebene liegen, oder dass der obere und der mittlere Scheitelpunkt (So, Sm) jeweils in der gleichen Radialebene liegen.

## Claims

1. A compression piston ring (2) having a running-surface region (4), an upper flank (6), a lower flank (8) and also an inner circumferential surface (10), wherein the running-surface region (4) is provided with a profiled section, which, as viewed over the axial height of the running-surface region (4), comprises mutually spaced, convexly spherically constructed sections (12, 14) having an upper and lower apex (So; Su), wherein a groove (16) with a depth (Tn) is arranged between the apexes (So, Su), wherein the spherical sections (12; 14) are arranged asymmetrically with respect to one another, with respect to the axial height (H) of the running-surface region, **characterized in that** both apexes (So, Su) are arranged below a centre (M) of the piston ring (2) in axial direction.

2. The piston ring according to Claim 1, **characterized in that** the upper apex (So) is arranged in a range of 22% to 45%, preferably 25% to 40% and further preferably 30% to 35% of the total height (H) of the piston ring (2), and the lower apex (Su) is arranged in a range of 0% to 20%, preferably 5% to 18% and further preferably 10% to 15% of the total height (H) of the piston ring (2) .

3. The piston ring (2) according to Claim 1 or 2, **characterized in that** an upper outer edge (18) of the piston ring (2) has a larger upper depth (To) compared to the upper apex (So) than a lower depth (Tu) of the lower outer edge (20) compared to the lower apex (Su).

4. The piston ring (2) according to Claim 1, 2 or 3, further having a third, central convexly spherical section with an apex (Sm), which is arranged between the upper apex (So) and the lower apex (Su), wherein the central apex (Sm) has a larger radial extent than the upper apex (So) and/or the lower apex (Su).

5. The piston ring (2) according to Claim 4, **characterized in that** an angle of an axial direction of the piston ring (2) and a line between the upper apex (So) and the central apex (Sm) is equal to an angle between an axial direction of the piston ring (2) and a line between the central apex (Sm) and the lower apex (Su).

6. The piston ring (2) according to Claim 4, **characterized in that** a line between the upper apex (So) and the central apex (Sm) is parallel to an axial direction of the piston ring (2) and the angle between an axial direction of the piston ring (2) and a line between the central apex (Sm) and the lower apex (Su) is between 1 and 6, preferably between 2 and 5 and further preferably between 3 and 4 angular minutes.

7. The piston ring (2) according to Claim 4, 5 or 6, **characterized in that** the contour of the sections between the upper apex (So) and the central apex (Sm) is in each case equal to the contour between the central apex (Sm) and the lower apex (Su).

8. The piston ring (2) according to one of the preceding claims, **characterized in that** the running-surface region (8) is provided with an anti-wear layer, e.g. diamond-like carbon (DLC), at least in the region of the apexes (So, Sm, Su).

9. The piston ring according to one of the preceding claims, **characterized in that** the depth (To) of the upper outer edge of the piston ring (2) is between 20 and 40 µm compared to the upper apex (So), the depth of the groove (Tn) is between 1 and 5 µm and the depth (Tu) of the lower outer edge of the piston ring (2) is between 5 and 20 µm compared to the lower apex (Su).

10. The piston ring according to one of the claims 4-7, **characterized in that** the lower and the upper apexes (So, Su) lie in the same radial plane in each case, or **in that** the upper and the central apexes (So, Sm) lie in the same radial plane in each case.

## Revendications

1. Segment de piston de compression (2) avec une zone de surface de glissement (4), un flanc supérieur (6), un flanc inférieur (8) ainsi qu'une surface circonférentielle intérieure (10), la zone de surface de glissement (4) étant munie d'un profilage comprenant, vu sur la hauteur axiale de la zone de surface de glissement (4), des portions (12, 14) réalisées de manière bombée convexe, espacées l'une de l'autre et présentant un sommet supérieur et inférieur (So ; Su), une rainure (16) d'une profondeur (Tn) étant disposée entre les sommets (So, Su), les portions bombées (12 ; 14) étant disposées de manière asymétrique l'une par rapport à l'autre en se référant à la hauteur axiale (H) de la zone de surface de glissement, **caractérisé en ce que** les deux sommets (So, Su) sont disposés dans la direction axiale au-dessous d'un centre (M) du segment de piston (2).

2. Segment de piston selon la revendication 1, **caractérisé en ce que** le sommet supérieur (So) est disposé dans une zone de 22 % à 45 %, de préférence de 25 % à 40 % et de plus grande préférence de 30 % à 35 % de la hauteur totale (H) du segment de piston (2), et le sommet inférieur (Su) est disposé dans une zone de 0 % à 20 %, de préférence de 5 % à 18 % et de plus grande préférence de 10 % à 15 % de la hauteur totale (H) du segment de piston (2).

3. Segment de piston (2) selon la revendication 1 ou 2, **caractérisé en ce qu'**un bord extérieur supérieur (18) du segment de piston (2) présente une profondeur supérieure (To) par rapport au sommet supérieur (So) plus grande qu'une profondeur inférieure (Tu) du bord extérieur inférieur (20) par rapport au sommet inférieur (Su).

4. Segment de piston (2) selon la revendication 1, 2 ou 3, présentant en outre une troisième portion bombée convexe intermédiaire avec un sommet (Sm) disposé entre le sommet supérieur (So) et le sommet inférieur (Su), le sommet intermédiaire (Sm) présentant une extension radiale plus grande que le sommet supérieur (So) et/ou le sommet inférieur (Su).

5. Segment de piston (2) selon la revendication 4, **caractérisé en ce qu'**un angle d'une direction axiale du segment de piston (2) et d'une ligne entre le sommet supérieur (So) et le sommet intermédiaire (Sm) est égal à un angle entre une direction axiale du segment de piston (2) et une ligne entre le sommet intermédiaire (Sm) et le sommet inférieur (Su).

6. Segment de piston (2) selon la revendication 4, **caractérisé en ce qu'**une ligne entre le sommet supérieur (So) et le sommet intermédiaire (Sm) est parallèle à une direction axiale du segment de piston (2), et l'angle entre une direction axiale du segment de piston (2) et une ligne entre le sommet intermédiaire (Sm) et le sommet inférieur (Su) mesure entre 1 et 6, de préférence entre 2 et 5 et de plus grande préférence entre 3 et 4 minutes d'angle.

7. Segment de piston (2) selon la revendication 4, 5 ou 6, **caractérisé en ce que** le contour des portions respectivement entre le sommet supérieur (So) et le sommet intermédiaire (Sm) est égal au contour entre le sommet intermédiaire (Sm) et le sommet inférieur (Su).

8. Segment de piston (2) selon l'une quelconque des revendications précédentes, **caractérisé en ce que** la zone de surface de glissement (8) est munie au moins au niveau des sommets (So, Sm, Su) d'une couche de protection anti-usure, par exemple en carbone analogue à du diamant (DLC).

9. Segment de piston selon l'une quelconque des revendications précédentes, **caractérisé en ce que** la profondeur (To) du bord extérieur supérieur du segment de piston (2) par rapport au sommet supérieur (So) est comprise entre 20 et 40 µm, la profondeur de la rainure (Tn) est comprise entre 1 et 5 µm, et la profondeur (Tu) du bord extérieur inférieur du segment de piston (2) par rapport au sommet inférieur (Su) est comprise entre 5 et 20 µm.

10. Segment de piston selon l'une quelconque des revendications 4 à 7, **caractérisé en ce que** les sommets inférieur et supérieur (So, Su) sont situés respectivement dans le même plan radial ou **en ce que** les sommets supérieur et intermédiaire (So, Sm) sont situés respectivement dans le même plan radial.
